# EUROPÄISCHE PATENTSCHRIFT

(11) **EP 3 209 897 B1**
(45) Veröffentlichungstag und Bekanntmachung des Hinweises auf die Patenterteilung: **22.05.2019**
(21) Anmeldenummer: 15793699.8
(22) Anmeldetag: 07.10.2015
(51) Int. Cl.: F16D 13/58

(54) **RÜCKSYSTEM FÜR EINE REIBKUPPLUNG MIT GLÄTTUNGSFEDER**
ENGAGEMENT/DISENGAGEMENT SYSTEM FOR A FRICTION CLUTCH, COMPRISING A SMOOTHING SPRING
SYSTÈME D'EMBRAYAGE POUR UN EMBRAYAGE À FRICTION À RESSORT DE LISSAGE

(30) Priorität: 20.10.2014 DE 102014221201
(43) Veröffentlichungstag der Anmeldung: 30.08.2017
(73) Patentinhaber: Schaeffler Technologies AG & Co. KG, 91074 Herzogenaurach (DE)
(72) Erfinder: VOORSPOELS, Ludovic, F-67410 Drusenheim (FR); SCHNEIDER, Michael, 76534 Baden-Baden (DE); DOLLANSKY, Johannes, 77830 Bühlertal (DE); HAMMERSTIEL, Fabian, 76189 Karlsruhe (DE); HELMER, Daniel, 77883 Ottenhöfen (DE)
(86) Internationale Anmeldenummer: PCT/DE2015/200472
(87) Internationale Veröffentlichungsnummer: WO 2016/062311

(56) Entgegenhaltungen:
- DE-A1- 19 846 423
- FR-A1- 2 699 623
- GB-A- 2 305 698
- JP-U- H0 251 723

## Beschreibung

Die vorliegende Erfindung betrifft ein Rücksystem für eine Reibkupplung gemäß dem Oberbegriff des Patentanspruchs 1. Insbesondere betrifft die vorliegende Erfindung ein Rücksystem für eine Reibkupplung, dass dem Einrücken und Ausrücken der Reibkupplung dient.

Im Stand der Technik sind Reibkupplungen bekannt, bei denen eine Tellerfeder für die notwendige Anpresskraft zwischen Reibelementen sorgt, so dass ein ausreichendes Drehmoment über die Reibelemente übertragbar ist. Mit der zunehmenden Größe des erforderlichen Drehmoments steigen die Anforderungen an solche Tellerfedern. Das bedeutet, dass die Reibelemente mit einer größeren Kraft gegeneinander gepresst werden müssen. Dies hat zur Folge, dass die Betätigung der Tellerfeder für den Benutzer der Reibkupplung schwieriger oder zumindest unangenehmer wird, weil die Ausrückkraft höher ist. Darüber hinaus sind bei großen zu übertragenden Drehmomenten die auf die Reibelemente der Reibkupplung einwirkenden Kräfte im Übergangsbereich von einem ausgerückten Zustand in den vollständig eingerückten Zustand (Betriebspunkt der Reibkupplung) deutlich größer. Zur Erleichterung der Bedienung solcher Rücksysteme sind Kompensationsfedern bekannt, die die Ausrückkraft des Rücksystems zwischen dem Betriebspunkt des Rücksystems und einem vollständig ausgerückten Punkt des Rücksystems reduzieren. Nachteilig an solchen Kompensationsfedern ist, dass eine Kennlinie einer resultierenden Kraft der Tellerfeder und Kompensationsfeder einen unstetigen Verlauf aufweist, was durch einen Benutzer als unangenehm empfunden werden kann.

Ein Rücksystem für eine Reibkupplung, das auf den Oberbegriff des Patentanspruchs 1 lesbar ist, ist aus der GB 2 305 698 A bekannt.

Aufgabe der Erfindung ist es, ein Rücksystem für eine Reibkupplung anzugeben, das besonders komfortabel betätigbar ist.

Diese Aufgabe wird gelöst mit einem Rücksystem gemäß den Merkmalen des unabhängigen Patentanspruchs. Weitere vorteilhafte Ausgestaltungen des Rücksystems sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Das erfindungsgemäße Rücksystem für eine Reibkupplung weist eine Einrückfeder zur Erzeugung einer Einrückkraft auf ein Reibpaket der Reibkupplung, eine Kompensationsfeder zur Erzeugung einer der Einrückkraft entgegen gerichteten Kompensationskraft und eine Glättungsfeder mit einer progressiven Federkennlinie auf, wobei die Glättungsfeder mit der Kompensationsfeder in Reihe geschaltet ist, so dass eine Kennlinie einer resultierenden Kraft zwischen einem Betriebspunkt des Rücksystems und einem Ausrückpunkt des Rücksystems maximal einen Wendepunkt aufweist.

Das hier vorgeschlagene Rücksystem für eine Reibkupplung, insbesondere Doppelkupplung, dient dem Einrücken und Ausrücken der Reibkupplung, wodurch eine Drehmomentübertragung der Reibkupplung von einem Antriebsmotor auf einen Antriebsstrang eines Kraftfahrzeugs steuerbar ist. Bei der Einrückfeder handelt es sich insbesondere um zumindest eine Tellerfeder, mit der eine Einrückkraft auf ein Reibpaket der Reibkupplung im eingerückten Zustand der Reibkupplung erzeugbar ist. Die Einrückfeder stützt sich insbesondere an einem festen Bauteil der Reibkupplung ab und erzeugt eine Einrückkraft auf ein Reibpaket, damit das Reibpaket ein vorgegebenes Drehmoment übertragen kann. Von einem Normalzustand, in dem die Reibkupplung eingerückt ist, ist die Einrückfeder mit Hilfe einer Betätigungseinrichtung auslenkbar, so dass das Reibpaket ausgerückt wird. Das Rücksystem weist weiter eine Kompensationsfeder auf, welche der Einrückfeder entgegen wirkt. Die Kompensationsfeder dient daher der Erzeugung einer der Einrückkraft entgegen gerichteten Kompensationskraft. Die Kompensationsfeder ist insbesondere derart eingerichtet, dass die Kompensationskraft über den Ausrückweg der Einrückfeder ansteigt. Somit ist im eingerückten Zustand des Rücksystems beziehungsweise der Reibkupplung die Kompensationskraft relativ gering oder sogar Null und verringert somit die Einrückkraft nicht oder zumindest nicht stark. Gleichzeitig wird aber mit zunehmendem Ausrückweg die Kompensationskraft größer, so dass ein Ausrücken durch die Federkraft der Kompensationsfeder unterstützt wird. Weiterhin weist das Rücksystem eine Glättungsfeder mit einer progressiven Federkennlinie auf. Unter progressiv ist hier insbesondere zu verstehen, dass die Federkraft über einen Federweg immer weiter steigt und/oder exponentiell zunimmt.

Die Glättungsfeder ist mit der Kompensationsfeder in Reihe geschaltet, so dass eine Kennlinie einer resultierenden Kraft zwischen einem Betriebspunkt des Rücksystems und einem Ausrückpunkt des Rücksystems maximal einen Wendepunkt aufweist. Bei dem Betriebspunkt des Rücksystems handelt es sich insbesondere um eine Position des Rücksystems, bei der die Reibkupplung vollständig eingerückt ist. Bei dem Ausrückpunkt des Rücksystems handelt es sich insbesondere um eine Position des Rücksystems, in dem die Reibkupplung vollständig ausgerückt ist. Die Kennlinie der resultierenden Kraft aus Kompensationskraft der Kompensationsfeder und einer Glättungskraft der Glättungsfeder (und gegebenenfalls weiterer mit der Kompensationsfeder und/oder der Glättungsfeder in Reihe geschalteter Federn) weist zwischen dem Betriebspunkt des Rücksystems und dem Ausrückpunkt des Rücksystems maximal einen Wendepunkt auf. Ein Wendepunkt des Funktionsgraphs beziehungsweise der Kennlinie der resultierenden Kraft liegt vor, wenn die Krümmung des Funktionsgraphs beziehungsweise der Kennlinie ihr Vorzeichen wechselt. Mit anderen Worten handelt es sich bei dem Wendepunkt um einen Punkt auf dem Funktionsgraphen oder der Kennlinie der resultierenden Kraft, an dem der Funktionsgraph beziehungsweise die Kennlinie sein Krümmungsverhalten ändert. Der Funktionsgraph beziehungsweise die Kennlinie wechselt hier entweder von einer Rechtskurve in eine Linkskurve oder umgekehrt. Dies führt im Vergleich zu bekannten Rücksystemen mit Kompensationsfedern zu einer geglätteten beziehungsweise verstetigten Kennlinie der resultierenden Kraft.

Zudem ist es vorteilhaft, wenn die Glättungsfeder zwischen einer Innenseite eines Kupplungsdeckels und der Kompensationsfeder angeordnet ist.

Ebenfalls ist es vorteilhaft, wenn die Glättungsfeder nach Art einer Wellenfeder ausgebildet ist. Als Wellenfeder bezeichnet man eine Sonderform einer Schraubenfeder, welche besonders in Einsatzfällen mit niedrigem Einbaumaß einsetzbar ist.

Weiterhin ist es vorteilhaft, wenn die Glättungsfeder nach Art einer konischen Druckfeder ausgebildet ist. Aus der konischen Form der Druckfeder ergibt sich, dass sich Drahtwindungen der Druckfeder beim Zusammendrücken der Druckfeder ineinander legen, so dass die Federkennlinie der konischen Druckfeder progressiv ansteigt. Die konische Druckfeder lässt sich zudem insbesondere auf eine Dicke eines Drahtdurchmessers der konischen Druckfeder zusammendrücken.

Zudem ist es vorteilhaft, wenn die Glättungsfeder nach Art einer Elastomerfeder ausgebildet ist. Die Elastomerfeder weist insbesondere zumindest ein elastisches Element auf. Weiterhin handelt es sich bei der Elastomerfeder insbesondere um eine Gummifeder.

Die Glättungsfeder weist ein erstes Blech und ein zweites Blech auf, zwischen denen zumindest ein Federelement angeordnet ist. Bei dem zumindest einen Federelement handelt es sich um ein Bauteil, das unter Belastung nachgibt und das nach Entlastung in seine ursprüngliche Gestalt zurückkehrt, sich also elastisch rückstellend verhält.

Des Weiteren ist es vorteilhaft, wenn das zumindest eine Federelement mit zumindest einem Niet an dem ersten Blech oder dem zweiten Blech befestigt ist. Bei dem zumindest einen Niet handelt es sich insbesondere um ein plastisch verformbares, zylindrisches Verbindungselement.

Ebenfalls vorteilhaft ist es, wenn die Glättungsfeder ringförmig ausgebildet ist.

Einem weiteren Aspekt der Erfindung folgend wird auch eine Reibkupplung für ein Kraftfahrzeug angegeben, dass ein erfindungsgemäßes Rücksystem aufweist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine Kennlinie einer resultierenden Kraft;
- Fig.2:: ein Rücksystem einer Reibkupplung;
- Fig. 3:: eine erste Variante einer Glättungsfeder;
- Fig. 4:: eine erste schematische Darstellung der ersten Variante der Glättungsfeder;
- Fig. 5:: eine zweite schematische Darstellung der ersten Variante der Glättungsfe-der;
- Fig. 6:: eine zweite Variante einer Glättungsfeder;
- Fig. 7:: eine konische Druckfeder der zweiten Variante der Glättungsfeder;
- Fig. 8:: eine progressive Federkennlinie der zweiten Variante der Glättungsfeder;
- Fig. 9:: eine dritte Variante einer Glättungsfeder; und
- Fig. 10:: eine progressive Federkennlinie der dritten Variante der Glättungsfeder.

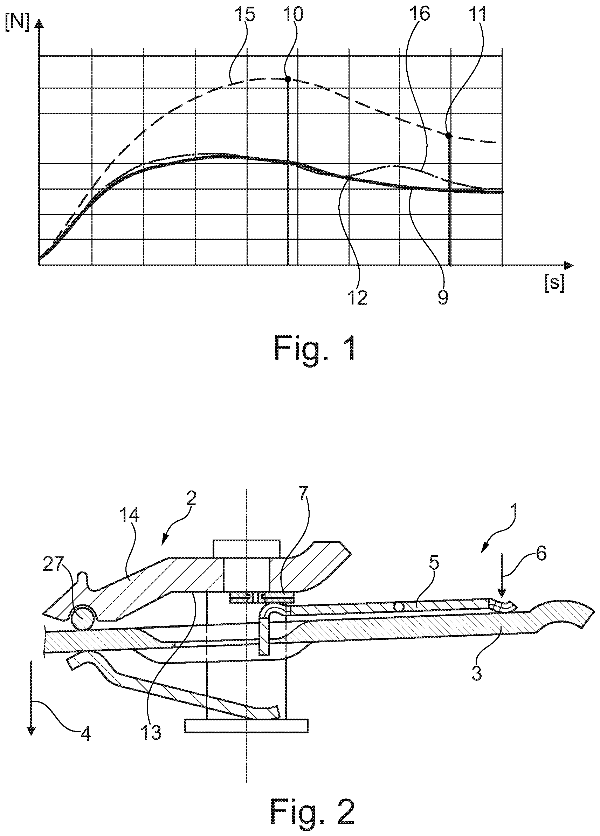

Die Fig. 1 zeigt ein Diagramm beziehungsweise ein kartesisches Koordinatensystem, bei dem auf der Ordinate die Ausrückkraft in Newton und auf der Abszisse ein Ausrückweg eines hier nicht gezeigten Rücksystems 1 in Millimeter aufgetragen sind. Die gestrichelt dargestellte erste Kennlinie 15 stellt eine Ausrückkraftkennlinie einer hier nicht gezeigten Reibungskupplung 2 ohne Kompensationsfedern 5 und Glättungsfedern 7 dar. Die strichpunktiert dargestellte zweite Kennlinie 16 stellt eine Ausrücckraftkennlinie einer hier nicht gezeigten Reibungskupplung 2 mit einer Kompensationsfeder 5 aber ohne Glättungsfedern 7 dar. Zu erkennen ist hier, dass die zweite Kennlinie 16 zwischen einem Betriebspunkt 10 und einem Ausrückpunkt 11 des hier nicht gezeigten Rücksystems 1 einen "Buckel" aufweist, der durch einen Benutzer des Rücksystems 1 negativ wahrgenommen wird. Die Kennlinie 9 stellt die Ausrückkraftkennlinie einer hier nicht gezeigten Reibungskupplung 2 mit einer Kompensationsfeder 5 und einer Glättungsfeder 7 dar. Diese weist zwischen dem Betriebspunkt 10 und dem Ausrückpunkt 11 nur einen Wendepunkt 12 auf und somit keinen "Buckel" wie die zweite Kennlinie 16.

Die Fig. 2 zeigt einen Teilschnitt durch ein Rücksystem 1 einer Reibkupplung 2. Das Rücksystem 1 weist eine Einrückfeder 3 zur Erzeugung einer Einrückkraft 4 auf ein hier nicht gezeigtes Reibpaket der Reibkupplung 2 auf. Die Einrückfeder 3 ist an einer Hebelauflage 27 beweglich gelagert. Weiterhin weist das Rücksystem 1 eine Kompensationsfeder 5 zur Erzeugung einer der Einrückkraft 4 entgegen gerichteten Kompensationskraft 6 auf. Weiterhin ist mit der Kompensationsfeder 5 eine Glättungsfeder 7 in Reihe geschaltet, so dass - wie in der Fig. 1 gezeigt - eine Kennlinie 9 einer resultierenden Kraft zwischen dem Betriebspunkt 10 des Rücksystems 1 und dem Ausrückpunkt 11 des Rücksystems 1 maximal einen Wendepunkt 12 aufweist. Die Glättungsfeder 7 ist zwischen einer Innenseite 13 eines Kupplungsdeckels 14 und der Kompensationsfeder 5 angeordnet.

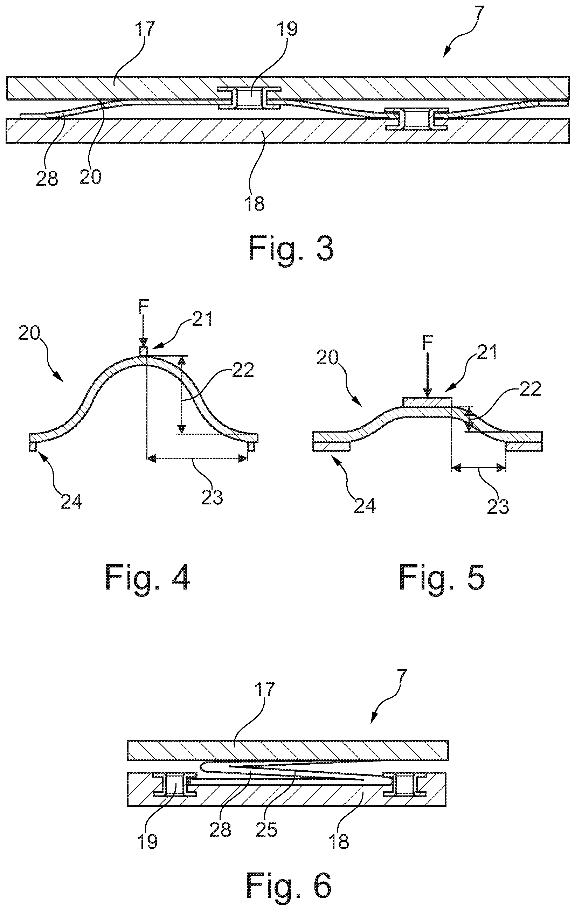

Die Fig. 3 zeigt eine erste Variante der Glättungsfeder 7. Bei dieser sind als Federelement 28 Federsegmente 20 zwischen einem ersten Blech 17 und einem zweiten Blech 18 angeordnet und mit Nieten 19 befestigt.

Die Fig. 4 zeigt eine erste schematische Darstellung und die Fig. 5 eine zweite schematische Darstellung eines in der Fig. 3 gezeigten Federsegments 20 der ersten Variante der Glättungsfeder 7. Das Federsegment 20 kann als ein vorgewellter, zweifach eingespannter Biegebalken aufgefasst werden. Bei der in Fig. 4 gezeigten geringen Belastung des Federsegments 20 ist ein erster Einspannbereich 21 und ein zweiter Einspannbereich 24 klein sowie eine freie Biegelänge 23 groß. Bei großer Federkraft, wie in der Fig. 5 gezeigt, nimmt der Kontakt an dem ersten Einspannbereich 21 und dem zweiten Einspannbereich 24 zu, da sich die Federsegmente 20 an das in der Fig. 3 gezeigte erste Blech 17 und zweite Blech 18 anschmiegen. Als Folge davon sinkt die freie Biegelänge 23. Die freie Biegelänge 23 ist in etwa dritter Potenz umgekehrt proportional zur Federsteifigkeit. Dies erklärt die große Zunahme der Federsteifigkeit über den Federweg. Weiterhin ist der Federweg 22 in der Fig. 4 und Fig. 5 gezeigt.

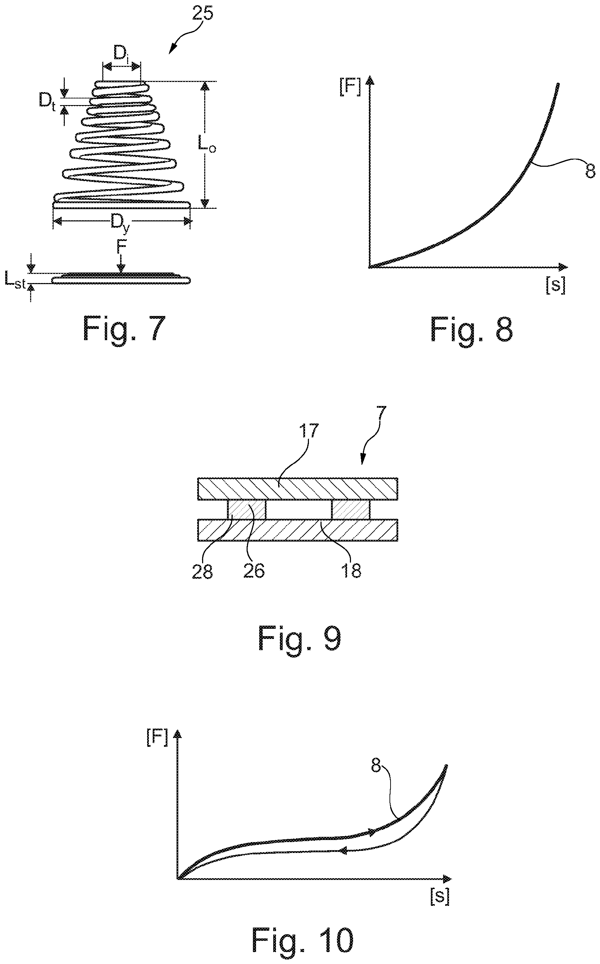

Die Fig. 6 zeigt eine zweite Variante der Glättungsfeder 7. Bei dieser ist als Federelement 28 eine konische Druckfeder 25 zwischen dem ersten Blech 17 und dem zweiten Blech 18 angeordnet und mit Nieten 19 befestigt. Die Fig. 7 zeigt die konische Druckfeder 25 der in der Fig. 6 gezeigten zweiten Variante der Glättungsfeder 7 in einem entspannten und gespannten Zustand. Dt stellt den Drahtdurchmesser, Dᵢ einen Innendurchmesser an einem kleinen Ende, D_{y} den Außendurchmesser an einem großen Ende, Lₒ eine unbelastete Länge und Lₛₜ eine Blocklänge der konischen Druckfeder 25 dar. Aus der konischen Form ergibt sich, dass die Drahtwindungen ineinander liegen, weshalb sich die Mehrzahl der konischen Druckfedern 25 auf die Dicke eines Drahtdurchmessers Dt zusammendrücken lässt. Die Fig. 8 zeigt darüber hinaus eine progressive Federkennlinie 8 der in der Fig. 6 gezeigten zweiten Variante der Glättungsfeder 7.

Die Fig. 9 zeigt eine dritte Variante der Glättungsfeder 7. Bei dieser sind als Federelemente 28 Gummifedern 26 zwischen einem ersten Blech 17 und einem zweiten Blech 18 angeordnet. Wie in der Fig. 10 gezeigt, weist auch die in der Fig. 9 gezeigte dritte Variante der Glättungsfeder 7 eine progressive Federkennlinie 8 auf.

Das vorgeschlagene Rücksystem 1 zeichnet sich durch eine besonders komfortable Betätigbarkeit aus.

### Bezugszeichenliste

- 1: Rücksystem
- 2: Reibungskupplung
- 3: Einrückfeder
- 4: Einrückkraft
- 5: Kompensationsfeder
- 6: Kompensationskraft
- 7: Glättungsfeder
- 8: progressive Federkennlinie
- 9: Kennlinie
- 10: Betriebspunkt
- 11: Ausrückpunkt
- 12: Wendepunkt
- 13: Innenseite
- 14: Kupplungsdeckel
- 15: erste Kennlinie
- 16: zweite Kennlinie
- 17: erstes Blech
- 18: zweites Blech
- 19: Niet
- 20: Federsegment
- 21: erster Einspannbereich
- 22: Federweg
- 23: freie Biegelänge
- 24: zweiter Einspannbereich
- 25: konische Druckfeder
- 26: Gummifeder
- 27: Hebelauflage
- 28: Federelement

## Patentansprüche

1. Rücksystem (1) für eine Reibkupplung (2) aufweisend eine Einrückfeder (3) zur Erzeugung einer Einrückkraft (4) auf ein Reibpaket der Reibkupplung (2), eine Kompensationsfeder (5) zur Erzeugung einer der Einrückkraft (4) entgegen gerichteten Kompensationskraft (6) und einer Glättungsfeder (7) mit einer progressiven Federkennlinie (8), wobei die Glättungsfeder (7) mit der Kompensationsfeder (5) in Reihe geschaltet ist, **dadurch gekennzeichnet, dass** eine Kennlinie (9) einer resultierenden Kraft zwischen einem Betriebspunkt (10) des Rücksystems (1) und einem Ausrückpunkt (11) des Rücksystems (1) maximal einen Wendepunkt (12) aufweist, und die Glättungsfeder (7) ein erstes Blech (17) und ein zweites Blech (18) aufweist, zwischen denen zumindest ein Federelement (28) angeordnet ist.

2. Rücksystem (1) nach Anspruch 1, wobei die Glättungsfeder (7) zwischen einer Innenseite (13) eines Kupplungsdeckels (14) und der Kompensationsfeder (5) angeordnet ist.

3. Rücksystem (1) nach einem der vorhergehenden Ansprüche, wobei die Glättungsfeder (7) nach Art einer Wellenfeder ausgebildet ist.

4. Rücksystem (1) nach einem der Ansprüche 1 oder 2, wobei die Glättungsfeder (7) nach Art einer konischen Druckfeder ausgebildet ist.

5. Rücksystem (1) nach einem der Ansprüche 1 oder 2, wobei die Glättungsfeder (7) nach Art einer Elastomerfeder ausgebildet ist.

6. Rücksystem (1) nach einem der vorhergehenden Ansprüche, wobei das zumindest eine Federelement (28) mit zumindest einem Niet (19) an dem ersten Blech (17) oder dem zweiten Blech (18) befestigt ist.

7. Rücksystem (1) nach einem der vorhergehenden Ansprüche, wobei die Glättungsfeder (7) ringförmig ausgebildet ist.

8. Reibkupplung (2) für ein Kraftfahrzeug, aufweisend ein Rücksystem (1) nach einem der vorhergehenden Ansprüche.

## Claims

1. Engagement/disengagement system (1) for a friction clutch (2) having an engagement spring (3) for generating an engagement force (4) on a friction assembly of the friction clutch (2), a compensation spring (5) for generating a compensation force (6) which is directed counter to the engagement force (4), and a smoothing spring (7) with a progressive spring characteristic curve (8), the smoothing spring (7) being connected in series with the compensation spring (5), **characterized in that** a characteristic curve (9) of a resulting force has at most one inflection point (12) between an operating point (10) of the engagement/disengagement system (1) and a disengagement point (11) of the engagement/disengagement system (1), and the smoothing spring (7) has a first metal plate (17) and a second metal plate (18), between which at least one spring element (28) is arranged.

2. Engagement/disengagement system (1) according to Claim 1, the smoothing spring (7) being arranged between an inner side (13) of a clutch cover (14) and the compensation spring (5).

3. Engagement/disengagement system (1) according to either of the preceding claims, the smoothing spring (7) being configured in the manner of a wave spring.

4. Engagement/disengagement system (1) according to either of Claims 1 and 2, the smoothing spring (7) being configured in the manner of a conical compression spring.

5. Engagement/disengagement system (1) according to either of Claims 1 and 2, the smoothing spring (7) being configured in the manner of an elastomer spring.

6. Engagement/disengagement system (1) according to one of the preceding claims, the at least one spring element (28) being fastened by way of at least one rivet (19) to the first metal plate (17) or the second metal plate (18).

7. Engagement/disengagement system (1) according to one of the preceding claims, the smoothing spring (7) being of annular configuration.

8. Friction clutch (2) for a motor vehicle, having an engagement/disengagement system (1) according to one of the preceding claims.

## Revendications

1. Système d'embrayage (1) pour un embrayage à friction (2) présentant un ressort d'embrayage (3) pour la production d'une force d'embrayage (4) sur un paquet de friction de l'embrayage à friction (2), un ressort de compensation (5) pour la production d'une force de compensation (6) dirigée à l'inverse de la force d'embrayage (4) et un ressort de lissage (7) avec une courbe caractéristique de ressort progressive (8), dans lequel le ressort de lissage (7) est monté en série avec le ressort de compensation (5), **caractérisé en ce qu'**une courbe caractéristique (9) d'une force résultante présente entre un point de fonctionnement (10) du système d'embrayage (1) et un point de débrayage (11) du système d'embrayage (1) au maximum un point d'inflexion (12), et le ressort de lissage (7) présente une première tôle (17) et une seconde tôle (18), entre lesquelles est disposé au moins un élément de ressort (28).

2. Système d'embrayage (1) selon la revendication 1, dans lequel le ressort de lissage (7) est disposé entre un côté intérieur (13) d'un couvercle d'embrayage (14) et le ressort de compensation (5).

3. Système d'embrayage (1) selon l'une quelconque des revendications précédentes, dans lequel le ressort de lissage (7) est réalisé à la manière d'un ressort ondulé.

4. Système d'embrayage (1) selon une des revendications 1 ou 2, dans lequel le ressort de lissage (7) est réalisé à la manière d'un ressort de compression conique.

5. Système d'embrayage (1) selon une des revendications 1 ou 2, dans lequel le ressort de lissage (7) est réalisé à la manière d'un ressort en élastomère.

6. Système d'embrayage (1) selon l'une quelconque des revendications précédentes, dans lequel ledit au moins un élément de ressort (28) est fixé à la première tôle (17) ou à la seconde tôle (18) au moyen d'au moins un rivet (19).

7. Système d'embrayage (1) selon l'une quelconque des revendications précédentes, dans lequel le ressort de lissage (7) est réalisé sous forme annulaire.

8. Embrayage à friction (2) pour un véhicule automobile, présentant un système d'embrayage (1) selon l'une quelconque des revendications précédentes.
